**Europäisches Patentamt**

(19) **European Patent Office**

**Office européen des brevets**

(11) Numéro de publication: **0 133 145**
**B1**

(12) **FASCICULE DE BREVET EUROPÉEN**

(45) Date de publication du fascicule du brevet:
**23.11.88**

(21) Numéro de dépôt: **84420128.5**

(22) Date de dépôt: **25.07.84**

(51) Int. Cl.⁴: **F 16 C 33/08,** F 16 C 17/10

(54) **Méthode de montage des paliers avec coussinets d'arbre et flasques de butées séparés.**

(30) Priorité: **26.07.83 FR 8312613**

(43) Date de publication de la demande:
**13.02.85 Bulletin 85/7**

(45) Mention de la délivrance du brevet:
**23.11.88 Bulletin 88/47**

(84) Etats contractants désignés:
**DE GB IT**

(56) Documents cité:
**CH-A-242 418**
**FR-A-2 108 522**
**GB-A-1 453 950**

(73) Titulaire: **SOCIETE INDUSTRIELLE DES COUSSINETS SIC, 4, rue de la Liberté, F-74000 Annecy (FR)**

(72) Inventeur: **Serres, Yves, 23, côte Perrière, F-74000 Annecy (FR)**

(74) Mandataire: **Séraphin, Léon, PECHINEY 28, rue de Bonnel, F-69433 Lyon Cedex 3 (FR)**

## Description

Cette invention est relative à une méthode de montage de coussinets d'arbre avec flasque(s) de butée séparé(s), en particulier dans les moteurs à combustion interne.

On connait des paliers où les parties en mouvement relatif sont séparées radialement par deux demi-coussinets hémi-cylindriques et axialement par des flasques dont la portée peut être de 180° ou 360°; les flasques peuvent également être situés à une seule extrémité du coussinet. Par opposition aux coussinets à joues, dans les ensembles flasques/demi-coussinets, les deux parties sont désolidarisées et ceci autorise une portée parfaite du flasque sur son appui. Cependant, cette solution présente l'inconvénient d'un montage plus difficile et plus coûteux. Une version modifiée décrite dans le brevet GB-1 297 559 montre une solidarisation mécanique lâche des flasques et des demi-coussinets par tenons et crans sertis, mais sa réalisation est complexe et difficile; par contre, son montage est aisé.

La méthode selon l'invention comme décrite dans la revendication 1 fournit une solution simple, économique pour l'assemblage rapide des paliers à coussinets d'arbre et flasques de butée séparés. La méthode consiste à assembler provisoirement au moyen d'un adhésif (colle, brasure, soudure(s) ponctuelle(s), ou tout autre moyen de liaison adéquat de nature non mécanique), les demi-coussinets et le (ou les) demi-flasque(s) correspondant(s), le serrage final du palier assurant la désolidarisation totale des membres de ce coussinet "composite".

Un dispositif selon l'invention est également décrit dans la revendication 7.

Pour assurer cette liaison temporaire, on peut par exemple:

1. Usiner, par exemple par découpage, sur le chant interne du flasque, qui a la forme d'une couronne circulaire de rayon intérieur R, et de centre 0, une partie cylindrique d'axe parallèle à l'axe de l'assemblage de rayon r < R, r étant le rayon externe du demi-coussinet correspondant et de centre 0', avec une excentration d = 00', variant de 0,5 à 10 mm, en fonction de la taille du coussinet considéré. Le centre 0' du cylindre de rayon r est situé dans un plan perpendiculaire au plan de joint du coussinet passant sensiblement par l'axe de rotation de l'assemblage (final).

Cette surface cylindrique peut être soit continue ou soit limitée à quelques zones locales espacées angulairement; dans ce dernier cas le reste du profil se trouve au-delà de cette surface cylindrique par rapport à l'axe.

2. Lier par collage, brasage ou tout autre moyen adapté le (ou les) flasque(s) sur la (ou les) extrémité(s) du demi-coussinet, de manière à réaliser provisoirement un demi-coussinet à joues (éventuellement unilatéral).

3. A mettre l'ensemble des demi-coussinets flasques en place dans l'assemblage.

4. A rompre la liaison provisoire demi-coussinet / flasque(s, sous l'action du serrage de l'assemblage (par exemple du chapeau de bielle sur la tête de bielle ou du chapeau de palier sur le carter pour des coussinets de vilebrequin).

L'invention sera mieux comprise à l'aide des figures et exemples suivants:

La figure 1a représente une coupe axiale du coussinet composite en cours de montage.

La figure 1b représente une vue en bout axiale du coussinet composite en cours de montage.

La figure 2a représente en coupe axiale le coussinet monté.

La figure 2b représente une vue en bout du coussinet monté.

La figure 3 représente une autre variante de la forme des flasques.

Un coussinet selon l'invention est constitué de deux demi-coussinets cylindriques (1) de rayon intérieur 27,5 mm et de rayon extérieur 29,5 mm, de 23 mm de longueur, avec un support acier et une couche (1a) anti-friction interne en cuproplomb de 0,3 mm d'épaisseur.

Les flasques d'extrémité (2) sont constitués de 2 demi-couronnes de rayon externe de 37 mm, de rayon interne de 30 mm et de 2,3 mm d'épaisseur totale, comportant sur leur face externe une couche (2a) de 0,4 mm d'anti-friction en Al-Sn. Ces flasques sont usinés sur le chant interne au rayon r = 29,5 mm avec une excentration 00' = 1,5 mm.

Les flasques sont alors assemblés aux extrémités des demi-coussinets avec une colle de type cyanoacrylate (IS496 de Loctite) sur la totalité ou une partie du secteur de rayon r (soit AB), de manière que la couche anti-friction des flasques soit extérieure à la longueur du demi-coussinet; la longueur du coussinet composite est alors de 24,4 mm; la longueur de l'arc AB dépend de l'épaisseur des flasques, de la nature de l'adhésif, de sa répartition et de la force désirée pour la rupture de la liaison. Cette liaison doit cependant être suffisante pour assurer une manipulation et une mise en place sans risque de rupture du coussinet composite.

Les demi-coussinets composites sont alors mis en place en respectant les jeux habituels nécessaires, connus de l'homme de l'art en tant que coussinets de palier d'un moteur.

Les demi-coussinets portant les flasques sont placés de chaque côté de l'axe du vilebrequin (4) et enserrés entre le carter (5), le chapeau de palier (6), et les joues de vilebrequin (8); dans le carter et le chapeau de palier sont préalablement usinés les embrèvements (7) destinés à recevoir les flasques (2).

Lors de la mise en place, lorsque les extrémités des deux demi-flasques (2) arrivent en portée l'un contre l'autre, les demi-coussinets sont encore séparés par une distance de 3 mm (2 x 00') et le serrage des boulons de paliers (non représentés) permet à la fois la rupture de la liaison sur la surface AB, et la mise en place correcte des demi-coussinets dans l'alésage et des flasques dans leurs embrèvements (7). Les demi-coussinets (1) et les flasques (2) sont alors indépendants.

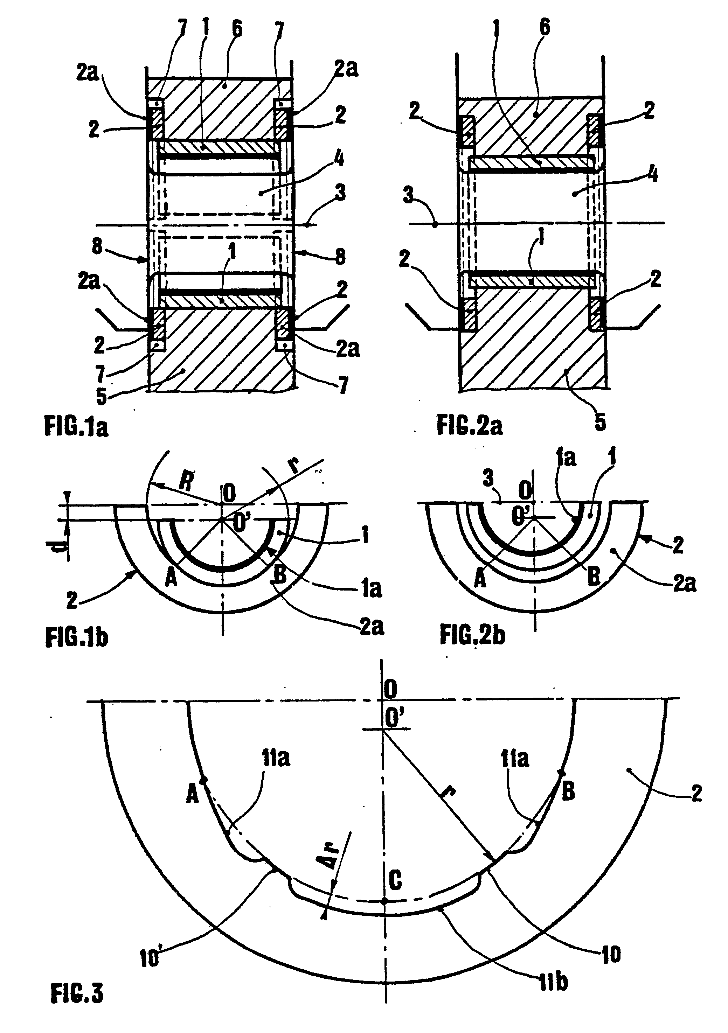

La figure 3 représente un flasque de butée (2) conforme à l'invention, comprenant sur sa partie interne deux portées cylindriques locales (10, 10') de rayon r situées sur le cylindre ABC d'axe 0', raccordées par un profil (11) se trouvant au-delà de ABC constitué d'un arc (11b) de rayon r + Δr entre les deux bossages et une courbe raccord (11a) aux deux extrémités.

## Revendications

1. Méthode de montage de coussinets d'arbre et de flasques de butée séparés dans un palier, caractérisé en ce que on assemble provisoirement au moyen d'un adhésif les demi-coussinets (1) avec le (ou les) demi-flasque(s) de butée (2), le serrage final du palier assurant la désolidarisation totale des membres de ce coussinet "composite".

2. Méthode selon la revendication 1 caractérisée en ce que:

a. on usine sur le chant interne du (ou des) flasque(s) (2) une partie cylindrique (AB), d'axe parallèle à l'axe de l'assemblage et de rayon (r) égal au rayon externe du demi-coussinet d'arbre, avec une excentration (d).

b. on lie les demi-flasques sur l'extrémité des demi-coussinets.

c. on met en place l'ensemble.

d. on rompt la liaison provisoire par serrage des éléments du palier.

3. Méthode selon la revendication 2, caractérisée en ce que la liaison provisoire est réalisée par collage.

4. Méthode selon la revendication 2, caractérisée en ce que la liaison provisoire est réalisée par brasage.

5. Méthode selon la revendication 2 caractérisée en ce que la liaison provisoire est réalisée par soudure(s) ponctuelle(s).

6. Méthode selon l'une des revendications 2 ou 5, caractérisée en ce que la partie antifriction (2a) des flasques (2) est placée à l'extérieur de la longueur du coussinet (1).

7. Dispositif pour un palier comprenant des demi-coussinets (1) d'arbre et un (ou des) demi-flasque(s) (2) de butée caractérisé par des demi-flasques (2) usinés sur leur chant interne au rayon (r) égal au rayon externe du demi-coussinet (1) d'arbre avec une excentration (d), et une liaison provisoire entre les demi-coussinets (1) et le (ou les) demi-flasque(s) (2), la liaison provisoire étant rompe par serrage final du palier.

## Patentansprüche

1. Verfahren zur Montage von getrennten Lagerschalen und Axiallagerringen in einem Lager,
dadurch gekennzeichnet,
daß mit Hilfe eines Klebstoffs provisorisch die Halbschalen (1) mit dem (oder den) Halbaxiallagerring bzw. -ringen (2) verbunden werden, wobei das Einspannen des Lagers am Ende der Montage das vollkommene Loslösen der Teile der "zusammengesetzten" Lagerschale bewirkt.

2. Verfahren nach Anspruch 1,
dadurch gekennzeichnet,
daß:

a) an der Innenkante des (oder der) Lagerrings (oder -ringe) (2) ein zylindrischer Bereich (AB) eingearbeitet wird, dessen Achse parallel zur Achse der Lageranordnung ist und dessen Durchmesser (r) gleich dem Außendurchmesser der Lagerhalbschale mit einer Exzentrizität (d) ist;

b) die Halblagerringe mit dem Ende der Lagerhalbschalen verbunden werden;

c) diese Einheit plaziert wird; und

d) die provisorische Verbindung durch Anziehen der Lagerelemente gebrochen wird.

3. Verfahren nach Anspruch 2,
dadurch gekennzeichnet,
daß die provisorische Verbindung durch Verkleben hergestellt wird.

4. Verfahren nach Anspruch 2,
dadurch gekennzeichnet,
daß die provisorische Verbindung durch Löten erfolgt.

5. Verfahren nach Anspruch 2,
dadurch gekennzeichnet,
daß die provisorische Verbindung durch eine Punktverschweißung bzw. Punktverschweißungen erfolgt.

6. Verfahren nach einem der Ansprüche 2 oder 5,
dadurch gekennzeichnet,
daß der reibungsmindernde Bereich (2a) der Lagerringe (2) außerhalb der Längserstreckung der Lagerschale (1) angeordnet ist.

7. Lager mit Halb-Axiallagerschalen (1) und einem (oder mehreren) Halb-Axiallagerring bzw. -ringen (2),
gekennzeichnet durch
Halblagerringe (2), die auf ihrer Innenkante mit einem Radius (r), der gleich dem Außenradius der Halb-Axiallagerschalen (1) ist, mit einer Exzentrizität (d) bearbeitet sind und eine provisorische Verbindung zwischen den Halblagerschalen (1) und dem (oder den) Halblagerring bzw. Halblagerringen (2) vorgesehen ist, wobei die provisorische Verbindung durch ein letztliches Anziehen des Lagers gebrochen wird.

## Claims

1. A method of installing shaft bearing shells and separate thrust side plates in a bearing characterised by provisionally assembling the half-shells (1) with the thrust half-plate or plates (2) by means of an adhesive, final clamping of the bearing causing the members of that 'composite' bearing shell to be totally separated from each other.

2. A method according to claim 1 characterised by:

a) machining on the intennal edge of the plate or plates (2) a cylindrical portion (AB) with the axis thereof parallel to the axis of the assembly and of a radius (r) equal to the outside radius of the shaft half-shell, with a degree of eccentricity (d),

b) joining the half-plates to the end of the half-shells,

c) setting the assembly in position, and

d) breaking the provisional join by clamping the elements of the bearing.

3. A method according to claim 2 characterised in that the provisional join is produced by glueing.

4. A method according to claim 2 characterised in that the provisional join is produced by brazing.

5. A method according to claim 2 characterised in that the provisional join is made by spot weld or welds.

6. A method according to one of claims 2 and 5 characterised in that the anti-friction portion (2a) of the plates (2) is disposed on the outside of the length of the bearing shell (1).

7. An arrangement for a bearing comprising shaft half-shells (1) and one or more thrust half-plates (2) characterised by half-plates (2) which are machined over their inside edge with a radius (r) equal to the outside radius of the half-shell (1) with a degree of eccentricity (d), and a provisional join between the half-shells (1) and the half-plate or plates (2), the provisional join being broken by final clamping of the bearing.

**FIG.1a**

**FIG.2a**

**FIG.1b**

**FIG.2b**

**FIG.3**